# EUROPEAN PATENT APPLICATION

(11) **EP 4 227 875 A1**
(43) Date of publication of application: **16.08.2023**
(21) Application number: 23152388.7
(22) Date of filing: 19.01.2023
(51) Int. Cl.: G06Q 20/22, G06Q 20/32, G06Q 20/34, G06Q 20/38, G06Q 20/40

(54) **SYSTEMS AND METHODS FOR LINKING TRANSACTION DEVICES**

(30) Priority: 15.02.2022 US 202217671978
(71) Applicant: Capital One Services, LLC, McLean, VA 22102 (US)
(72) Inventor: MANTONI, Robert, McLean, VA 22102 (US); CASTELLAR, Jose, McLean, VA22102 (US); VUKICH, Adam, Springfield, VA22153 (US)
(74) Representative: Boult Wade Tennant LLP

(57) **Abstract**

A system may program a plurality of dynamic transaction cards, wherein a threshold number of the plurality of dynamic transaction cards is required for approving a transaction. The system may assign each dynamic transaction card of the plurality of dynamic transaction cards to a respective user of a plurality of users. The system may receive, from a first respective user of the plurality of users, a request to complete the transaction. The system may cause a respective mobile device, associated with second respective user(s) of the plurality of users, to display an approval request. The system may receive approval(s) from a respective dynamic transaction card, via the respective mobile device of the second respective user(s), in response to the approval request. The system may determine whether a total number of the approval(s) matches the threshold number of dynamic transaction cards, and responsive to making that determination, may approve the transaction.

## Description

### FIELD

The disclosed technology relates to systems and methods for linking transaction devices, and more particularly, for linking dynamic transaction cards associated with a secret sharing algorithm.

### BACKGROUND

The concept of secret sharing may be incorporated into cryptographic systems and methods. However, this concept has not traditionally been used in association with multi-user identification for purposes of authorizing group transactions (e.g., certificate approval, domain name transfers, purchase orders, etc.). That is, there may be situations where groups of individuals, such as corporate teams, families, boards, etc., may desire certain transactions be approved by multiple individuals within the group before those transactions may be completed. Multi-user identification, however, may be cumbersome particularly in situations where individual group members are not physically present in a shared location.

Accordingly, there is a need for improved systems and methods for linking transaction devices. Embodiments of the present disclosure are directed to this and other considerations.

### SUMMARY

Disclosed embodiments may include a system for linking transaction devices. The system may include one or more processors, and memory in communication with the one or more processors and storing instructions that, when executed by the one or more processors, are configured to cause the system to perform a method for linking dynamic transaction cards. The system may receive a first request to generate a plurality of dynamic transaction cards corresponding to a secret sharing algorithm. The system may program the plurality of dynamic transaction cards based on the first request, the secret sharing algorithm comprising one or more predetermined rules, wherein at least one of the one or more predetermined rules comprises a threshold number of dynamic transaction cards of the plurality of dynamic transaction cards required for approving a transaction (e.g., a certificate approval, an access request, a payment, etc.). The system may assign each dynamic transaction card of the plurality of dynamic transaction cards to a respective user of a plurality of users. The system may receive, from a first respective user of the plurality of users, a second request to complete a first transaction, the second request comprising one or more transaction details. The system may tokenize the one or more transaction details. The system may cause a respective mobile device (e.g., a mobile phone) of one or more second respective users of the plurality of users, to display the tokenized one or more transaction details and an approval request. The system may receive, from a respective dynamic transaction card via the respective mobile device of the one or more second respective users in response to the approval request, one or more approvals. The system may determine whether a total number of the one or more approvals matches the threshold number of dynamic transaction cards. Responsive to determining the total number of the one or more approvals matches the threshold number of dynamic transaction cards, the system may approve the first transaction.

In another embodiment, the system may include one or more processors, and memory in communication with the one or more processors and storing instructions that, when executed by the one or more processors, are configured to cause the system to perform a method for linking dynamic transaction cards. The system may receive a first request to generate a plurality of dynamic transaction cards corresponding to a first predetermined rule, wherein the first predetermined rule comprises a threshold number of dynamic transaction cards of the plurality of dynamic transaction cards required for approving a transaction. The system may program the plurality of dynamic transaction cards based on the first request. The system may assign each dynamic transaction card of the plurality of dynamic transaction cards to a respective user of a plurality of users. The system may cause a respective mobile device of one or more first respective users of the plurality of users to display a pre-approval request for a first transaction. The system may receive, via the respective mobile device of the one or more first respective users in response to the pre-approval request, one or more pre-approvals. The system may receive, from a second respective user of the plurality of users, a second request to complete the first transaction. The system may determine whether a first total number of the one or more pre-approvals matches the threshold number of dynamic transaction cards. Responsive to determining the first total number of the one or more pre-approvals matches the threshold number of dynamic transaction cards, the system may approve the first transaction. However, responsive to determining the first total number of the one or more pre-approvals does not match the threshold number of dynamic transaction cards, the system may cause the respective mobile device of the one or more first respective users of the plurality of users to display an approval request; receive, via the respective mobile device of the one or more first respective users in response to the approval request, one or more approvals; determine whether a second total number of the one or more approvals matches the threshold number of dynamic transaction cards; and responsive to determining the second total number of the one or more approvals matches the threshold number of dynamic transaction cards, approve the first transaction.

In another embodiment, the system may include one or more processors, and memory in communication with the one or more processors and storing instructions that, when executed by the one or more processors, are configured to cause the system to perform a method for linking dynamic transaction cards. The system may program a plurality of dynamic transaction cards, wherein a threshold number of dynamic transaction cards of the plurality of dynamic transaction cards is required for approving a transaction. The system may assign each dynamic transaction card of the plurality of dynamic transaction cards to a respective user of a plurality of users. The system may receive, from a first respective user of the plurality of users, a request to complete the transaction. The system may cause a respective mobile device of one or more second respective users of the plurality of users, to display an approval request. The system may receive, from a respective dynamic transaction card via the respective mobile device of the one or more second respective users in response to the approval request, one or more approvals. The system may determine whether a total number of the one or more approvals matches the threshold number of dynamic transaction cards. Responsive to determining the total number of the one or more approvals matches the threshold number of dynamic transaction cards, the system may approve the transaction.

Further implementations, features, and aspects of the disclosed technology, and the advantages offered thereby, are described in greater detail hereinafter, and can be understood with reference to the following detailed description, accompanying drawings, and claims.

### BRIEF DESCRIPTION OF THE DRAWINGS

Reference will now be made to the accompanying drawings, which are not necessarily drawn to scale, and which illustrate various implementations, aspects, and principles of the disclosed technology. In the drawings:
FIG. 1 is a block diagram of an example system that may be used to link transaction devices associated with a secret sharing algorithm, according to an example implementation of the disclosed technology.
FIGS. 2A-2C are a block diagram of an example transaction device, according to an example implementation of the disclosed technology.
FIG. 3 is a block diagram of an example user device, according to an example implementation of the disclosed technology.
FIG. 4 is a block diagram of an example device programming system, according to an example implementation of the disclosed technology.
FIG. 5 is a flow diagram illustrating an exemplary method for linking transaction devices, in accordance with certain embodiments of the disclosed technology.
FIGS. 6A-6B are a flow diagram illustrating an exemplary method for linking transaction devices, in accordance with certain embodiments of the disclosed technology.

### DETAILED DESCRIPTION

Examples of the present disclosure relate to systems and methods for linking transaction devices associated with a secret sharing algorithm. In particular, the disclosed technology relates to systems and methods for programming a plurality of dynamic transaction cards such that a threshold number of the cards is required for approving a transaction, assigning each card to a respective user of a plurality of users, receiving a transaction request from one user of the plurality of users, transmitting an approval request to a respective mobile device of each of the other users, and determining whether a number of approvals received back from the other users, from each respective dynamic transaction card via each respective mobile device, matches the threshold number. The systems and methods described herein are thus necessarily rooted in computer and technology as they utilize linked dynamic devices for purposes of providing multi-user identification for transaction sharing.

Some implementations of the disclosed technology will be described more fully with reference to the accompanying drawings. This disclosed technology may, however, be embodied in many different forms and should not be construed as limited to the implementations set forth herein. The components described hereinafter as making up various elements of the disclosed technology are intended to be illustrative and not restrictive. Many suitable components that would perform the same or similar functions as components described herein are intended to be embraced within the scope of the disclosed electronic devices and methods.

Reference will now be made in detail to example embodiments of the disclosed technology that are illustrated in the accompanying drawings and disclosed herein. Wherever convenient, the same reference numbers will be used throughout the drawings to refer to the same or like parts.

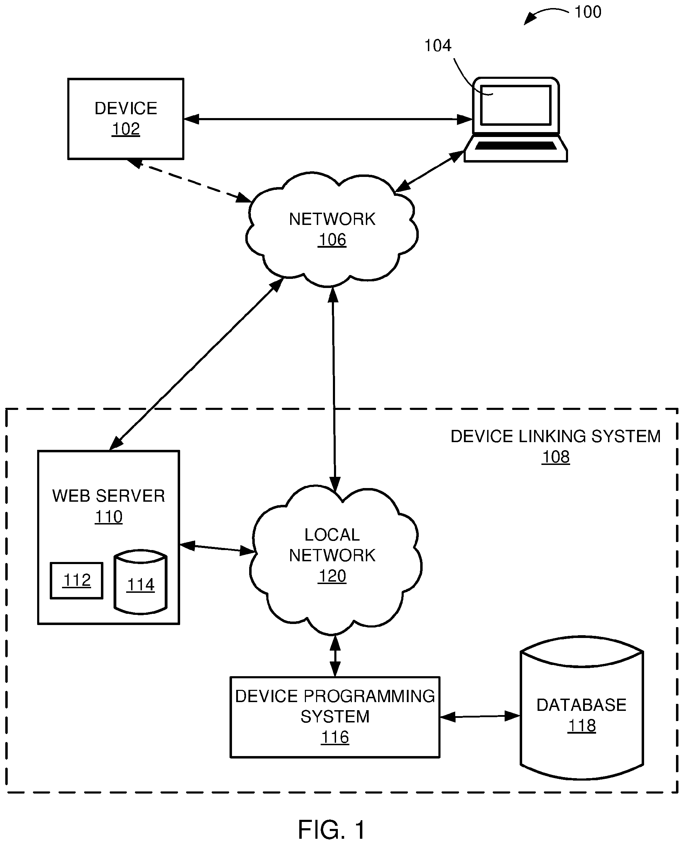

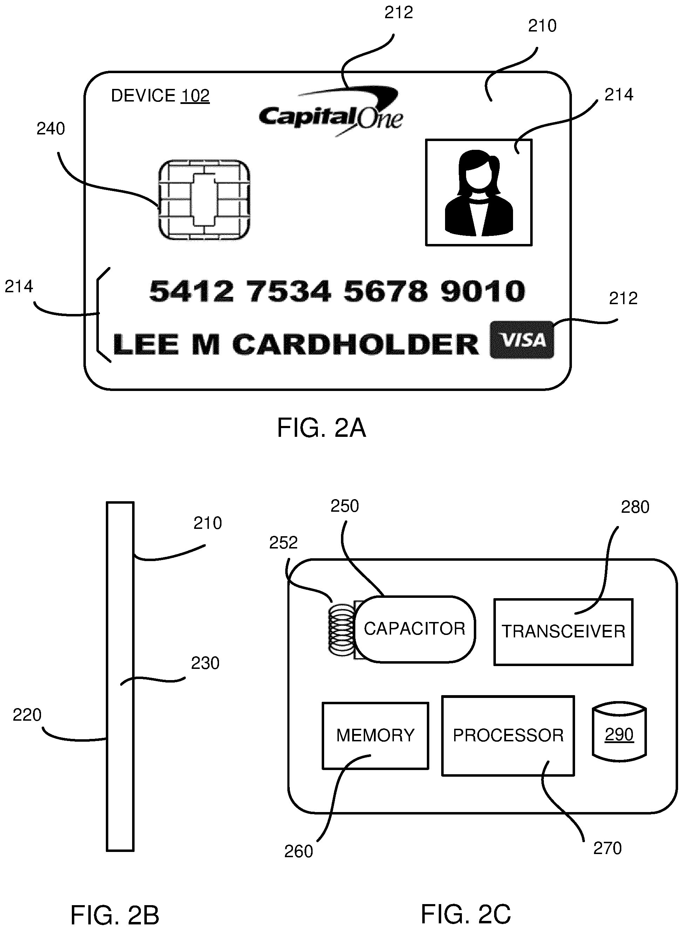

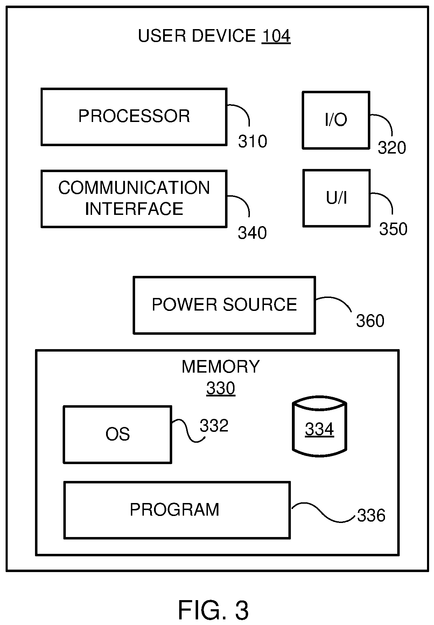

FIG. 1 is a block diagram of an example system that may be used to link transaction devices associated with a secret sharing algorithm, according to an example implementation of the disclosed technology. The components and arrangements shown in FIG. 1 are not intended to limit the disclosed embodiments as the components used to implement the disclosed processes and features may vary. As shown, a system 100 may comprise a transaction device 102, further described below with respect to FIGS. 2A-2C, and a user device 104, further described below with respect to FIG. 3, interacting with a device linking system 108 via a network 106. In certain example implementations, the device linking system 108 may include a web server 110, a device programming system 116, a database 118, and a local network 120.

In some embodiments, a user may operate the user device 104. The user device 104 can include one or more of a mobile device, smart phone, general purpose computer, tablet computer, laptop computer, telephone, a public switched telephone network (PSTN) landline, smart wearable device, voice command device, other mobile computing device, or any other device capable of communicating with network 106 and ultimately communicating with the transaction device 102 and one or more components of the device linking system 108. In some embodiments, the user device 104 may include or incorporate electronic communication devices for hearing or vision impaired users.

Customers may include individuals such as, for example, subscribers, clients, prospective clients, or customers of an entity associated with an organization, such as individuals who have obtained, will obtain, or may obtain a product, service, or consultation from or conduct a transaction in relation to an entity associated with the device linking system 108. According to some embodiments, the user device 104 may include an environmental sensor for obtaining audio or visual data, such as a microphone and/or digital camera, a geographic location sensor for determining the location of the device, an input/output (I/O) device such as a transceiver for sending and receiving data, a display for displaying digital images, one or more processors, and a memory in communication with the one or more processors.

Network 106 may be of any suitable type, including individual connections via the internet such as cellular or WiFi networks. In some embodiments, network 106 may connect terminals, services, and mobile devices using direct connections such as radio-frequency identification (RFID), near-field communication (NFC), Bluetooth^{™}, low-energy Bluetooth^{™} (BLE), WiFi^{™}, ZigBee^{™}, ambient backscatter communications (ABC) protocols, universal serial bus (USB), wide area network (WAN), or local area network (LAN). Because the information transmitted may be personal or confidential, security concerns may dictate one or more of these types of connections be encrypted or otherwise secured. In some embodiments, however, the information being transmitted may be less personal, and therefore the network connections may be selected for convenience over security.

Network 106 may include any type of computer networking arrangement used to exchange data. For example, network 106 may be the Internet, a private data network, virtual private network using a public network, and/or other suitable connection(s) that enable(s) components in the system 100 environment to send and receive information between the components of system 100. Network 106 may also include a PSTN and/or a wireless network.

Device linking system 108 may be associated with and optionally controlled by one or more entities such as a business, corporation, individual, partnership, or any other entity that provides one or more of goods, services, and consultations to individuals such as customers. In some embodiments, device linking system 108 may be controlled by a third party on behalf of another business, corporation, individual, or partnership. Device linking system 108 may include one or more servers and computer systems for performing one or more functions associated with products and/or services that the organization provides.

Web server 110 may include a computer system configured to generate and provide one or more websites accessible to customers, as well as any other individuals involved in accessing system 100's normal operations. Web server 110 may include a computer system configured to receive communications from user device 104 via for example, a mobile application, a chat program, an instant messaging program, a voice-to-text program, an SMS message, email, or any other type or format of written or electronic communication. Web server 110 may have one or more processors 112 and one or more web server databases 114, which may be any suitable repository of website data. Information stored in web server 110 may be accessed (e.g., retrieved, updated, and added to) via local network 120 and/or network 106 by one or more devices or systems (e.g., device programming system 116) of system 100. In some embodiments, web server 110 may host websites or applications that may be accessed by user device 104. For example, web server 110 may host a financial service provider website that a user device may access by providing an attempted login that is authenticated by device programming system 116. According to some embodiments, web server 110 may include software tools, similar to those described with respect to user device 104 above, that may allow web server 110 to obtain network identification data from user device 104. In some embodiments, web server 110 may have a similar structure and components that are similar to those described below with respect to transaction device 102, user device 104, and/or device programming system 116.

Local network 120 may include any type of computer networking arrangement used to exchange data in a localized area, such as WiFi, Bluetooth^{™} Ethernet, and other suitable network connections that enable components of device linking system 108 to interact with one another and to connect to network 106 for interacting with components in the system 100 environment. In some embodiments, local network 120 may include an interface for communicating with or linking to network 106. In other embodiments, certain components of device linking system 108 may communicate via network 106, without a separate local network 120.

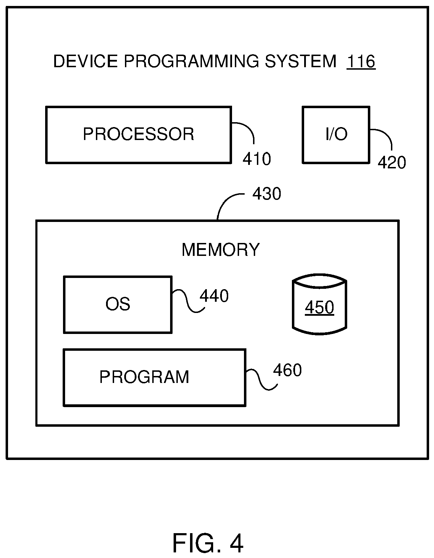

In accordance with certain example implementations of the disclosed technology, device linking system 108 may include one or more computer systems configured to compile data from a plurality of sources, for example, web server 110, device programming system 116, and/or database 118. Device programming system 116 may correlate compiled data, analyze the compiled data, arrange the compiled data, generate derived data based on the compiled data, and store the compiled and derived data in a database such as database 118. According to some embodiments, database 118 may be a database associated with an organization and/or a related entity that stores a variety of information relating to customers, transactions, trainings, and business operations. Database 118 may also serve as a back-up storage device and may contain data and information that is also stored on, for example, database 450, as discussed below with reference to FIG. 4.

Although the preceding description describes various functions of a web server 110, a device programming system 116, and a database 118, in some embodiments, some or all of these functions may be carried out by a single computing device or a plurality of computing devices in a (cloud) serverless system.

FIGS. 2A-2C provide an example of a transaction device 102 configured to be programmed such that transaction device 102 may be linked to other transaction devices. FIGS. 2A-2C are described simultaneously herein, as each sub-figure shows the same physical transaction device 102 yet displayed from different perspectives to illustrate different internal and external components.

Transaction device 102 may be configured at various sizes and/or shapes and made of a substrate, such as plastic, metal, etc. For example, transaction device 102 may be a similar size and shape as a standard transaction card (e.g., a credit card), a USB memory stick, or a mobile phone case. A benefit of transaction device 102 being a similar size and shape as a mobile phone case is that a user of transaction device 102 may be able to physically connect transaction device 102 to the user's mobile phone (e.g., user device 104) to eliminate the need to carry around two separate objects. Additionally, the user's mobile phone may provide a charging source for transaction device 102, as further discussed below.

FIGS. 2A-2C provide an example of a transaction device 102 shaped like a standard credit card, which may include a front surface 210 containing one or more general characters 212 and one or more personal identification characters 214, a back surface 220, one or more side surfaces 230, a computer-readable chip 240, a capacitor 250, a memory 260, one or more processors 270, a transceiver 280 for sending and receiving data, and one or more databases 290, which may be any suitable repository of data. In some embodiments, transaction device 102 may also include a magnetic strip.

General characters 212 may contain non-sensitive information, such as merchant or other entity identifiers (e.g., merchant logo, card carrier, etc.). General characters 212 may be formed primarily in one or more colors and/or one or more materials. General characters 212 may be formed as such in order to either blend in with or provide contrast with one or more other features of transaction device 102, e.g., front surface 210.

Personal identification characters 214 may contain sensitive information, such as personal information (e.g., name, address, social security number, photo identification, etc.), financial information (e.g., card number, cardholder name, an expiration date, a validation code, etc.), and the like.

Chip 240 may be a smart chip or an integrated circuit. In this regard, chip 240 may include a microprocessor and memory, such as read only memory (ROM) and random-access memory (RAM). Additionally, chip 240 may include one or more contact pads to receive voltage to power transaction device 102 and exchange signals with a terminal. In some embodiments, chip 240 may be configured to execute one or more applications or one or more applets. The applications and/or applets may allow chip 240 to process transactions, for example, using a transaction application and/or applet. For example, chip 240 may verify a cardholder via a method supported by the terminal and agreed upon by chip 240. Additionally, chip 240 may confirm the transaction, for example, by verifying the cardholder, determining any processing restrictions, authenticating offline data associated with the cardholder, or any combination thereof. In some instances, the terminal may determine that the transaction is required to be processed via online processing. In these instances, chip 240 may generate a request authorization that is transmitted to the issuer, via the terminal. In other examples, one or more applications and/or applets may allow chip 240 to determine whether a current transaction is a duplicate of an earlier transaction. In further examples, one or more applications and/or applets may allow chip 240 to perform cryptographic processing (e.g., generating and/or transmitting of unique transaction-specific keys), authenticate transaction device 102, define risk management parameters (e.g., when the transaction may be conducted offline), digitally sign payment data, and verify the cardholder. Additionally, or alternatively, chip 240 may be a dual interface chip that provides for contact and contact-less interfaces.

Capacitor 250 may be configured to receive power from an external power source. In some embodiments, capacitor 250 may be configured to charge when transaction device 102 connects with a computer terminal. In some embodiments, capacitor 260 may be configured to charge wirelessly via inductive charging coil 252 when transaction device 102 is placed within an electromagnetic field, e.g., within close proximity to an NFC reader of a mobile device (e.g., user device 104).

Memory 260 may include one or more memory devices that store data and instructions used to perform one or more features of the disclosed embodiments. Memory 260 may also include any combination of one or more databases controlled by memory controller devices (e.g., server(s), etc.) or software, such as document management systems, Microsoft^{™} SQL databases, SharePoint^{™} databases, Oracle^{™} databases, Sybase^{™} databases, or other relational or non-relational databases. Memory 260 may include software components that, when executed by processor 270, as described below, perform one or more processes consistent with the disclosed embodiments. In some embodiments, memory 260 may include one or more databases for storing related data to enable transaction device 102 to perform one or more of the processes and functionalities associated with the disclosed embodiments.

Memory 260 may include, in some implementations, one or more suitable types of memory (e.g. such as volatile or non-volatile memory, RAM, ROM, programmable read-only memory (PROM), erasable programmable read-only memory (EPROM), electrically erasable programmable read-only memory (EEPROM), magnetic disks, optical disks, floppy disks, hard disks, removable cartridges, flash memory, a redundant array of independent disks (RAID), and the like), for storing files including an operating system, application programs (including, for example, a web browser application, a widget or gadget engine, and or other applications, as necessary), executable instructions and data. In one embodiment, the processing techniques described herein may be implemented as a combination of executable instructions and data stored within memory 260.

Transaction device 102 may also be communicatively connected to one or more memory devices (e.g., databases) locally or through a network. The remote memory devices may be configured to store information and may be accessed and/or managed by transaction device 102. By way of example, the remote memory devices may be document management systems, MicrosoftTM SQL database, SharePoint^{™} databases, Oracle^{™} databases, Sybase^{™} databases, or other relational or non-relational databases. Systems and methods consistent with disclosed embodiments, however, are not limited to separate databases or even to the use of a database.

Processor 270 may include one or more of a microprocessor, microcontroller, digital signal processor, co-processor or the like or combinations thereof capable of executing stored instructions and operating upon stored data. Processor 270 may be one or more known processing devices, such as, but not limited to, a microprocessor from the Core^{™} family manufactured by Intel^{™}, the Ryzen^{™} family manufactured by AMD^{™}, or a system-on-chip processor using an ARM^{™} or other similar architecture. Processor 270 may constitute a single core or multiple core processor that executes parallel processes simultaneously, a central processing unit (CPU), an accelerated processing unit (APU), a graphics processing unit (GPU), a microcontroller, a digital signal processor (DSP), a field-programmable gate array (FPGA), an application-specific integrated circuit (ASIC) or another type of processing component. For example, processor 270 may be a single core processor that is configured with virtual processing technologies. In certain embodiments, processor 270 may use logical processors to simultaneously execute and control multiple processes. Processor 270 may implement virtual machine (VM) technologies, or other similar known technologies to provide the ability to execute, control, run, manipulate, store, etc. multiple software processes, applications, programs, etc. One of ordinary skill in the art would understand that other types of processor arrangements could be implemented that provide for the capabilities disclosed herein.

Processor 270 may execute one or more programs located remotely from transaction device 102. For example, transaction device 102 may access one or more remote programs that, when executed, perform functions related to disclosed embodiments.

In accordance with certain example implementations of the disclosed technology, device transaction 102 may include one or more storage devices configured to store information used by processor 270 (or other components) to perform certain functions related to the disclosed embodiments. In one example, transaction device 102 may include memory 260 that includes instructions to enable processor 270 to execute one or more applications, such as server applications, network communication processes, and any other type of application or software known to be available on computer systems. Alternatively, the instructions, application programs, etc., may be stored in an external storage or available from a memory over a network. The one or more storage devices may be a volatile or non-volatile, magnetic, semiconductor, tape, optical, removable, non-removable, or other type of storage device or tangible computer-readable medium.

FIG. 3 provides an example user device 104, in accordance with certain embodiments of the disclosed technology. As shown, user device 104 may include a processor 310; an I/O device 320; a memory 330, which may contain an operating system (OS) 332, a storage device 334, which may be any suitable repository of data, and a program 336; a communication interface 340; a user interface (U/I) 350; and a power source 360. User device 104 may be configured with one or more of the same or similar components as transaction device 102, as described above with respect to FIGS. 2A-2C, and/or device programming system 116, as described below with respect to FIG. 4.

Processor 310 may include one or more of an ASIC, programmable logic device, microprocessor, microcontroller, digital signal processor, co-processor or the like or combinations thereof capable of executing stored instructions and operating upon stored data. Memory 330 may include, in some implementations, one or more suitable types of memory (e.g., volatile or non-volatile memory, RAM, ROM, PROM, EPROM, EEPROM, magnetic disks, optical disks, floppy disks, hard disks, removable cartridges, flash memory, RAID, and the like) for storing files including operating system 332, application programs 336 (including, for example, a web browser application, a widget or gadget engine, and/or other applications, as necessary), executable instructions and data. In some embodiments, processor 310 may include a secure microcontroller, which may be configured to transmit and/or facilitate payment transactions and/or cryptography. In some embodiments, processor 310 may comprise a single secure microcontroller configured to transmit and/or facilitate payment, encrypt and/or decrypt data, and/or process any other program instructions. In some embodiments, processor 310 may include one or more secure microcontrollers and/or other processing devices such that one or more secure microcontroller is configured to transmit and/or facilitate payment and/or encrypt and/or decrypt data, while one or more other processing device is configured to process any other program instructions. In some embodiments, some or all of the processing techniques described herein can be implemented as a combination of executable instructions and data within memory 330.

Processor 310 may be one or more known processing devices, such as, but not limited to, a microprocessor from the Core^{™} family manufactured by Intel^{™}, the Ryzen^{™} family manufactured by AMD^{™}, or a system-on-chip processor using an ARM^{™} or other similar architecture. Processor 310 may constitute a single core or multiple core processor that executes parallel processes simultaneously, a CPU, an APU, a GPU, a microcontroller, a DSP, an FPGA, an ASIC or another type of processing component. For example, processor 310 may be a single core processor that is configured with virtual processing technologies. In certain embodiments, processor 310 may use logical processors to simultaneously execute and control multiple processes. Processor 310 may implement VM technologies, or other similar known technologies to provide the ability to execute, control, run, manipulate, store, etc. multiple software processes, applications, programs, etc. One of ordinary skill in the art would understand that other types of processor arrangements could be implemented that provide for the capabilities disclosed herein.

Communication interface 340 may include a transceiver. In some embodiments, user device 104 may further include a peripheral interface, a mobile network interface in communication with processor 310, a bus configured to facilitate communication between the various components of user device 104, and/or a power source configured to power one or more components of user device 104. In certain embodiments, user device 104 may include a geographic location sensor (GLS) for determining the geographic location of user device 104.

User device 104 may include U/I device 360 for receiving user input data, such as data representative of a click, a scroll, a tap, a press, a spatial gesture (e.g., as detected by one or more accelerometers and/or gyroscopes), or typing on an input device that can detect tactile inputs.

User device 104 may also include one or more I/O devices 320 that may comprise one or more interfaces for receiving signals or input from devices and providing signals or output to one or more devices that allow data to be received and/or transmitted by user device 104. For example, user device 104 may include interface components, which may provide interfaces to one or more input devices, such as one or more keyboards, mouse devices, touch screens, track pads, trackballs, scroll wheels, digital cameras, microphones, sensors, and the like, that enable user device 104 to receive data from a user.

User device 104 may include power source 360, which may be a component configured to receive power from an external power source, such as a capacitor, battery, solar powered panel, etc. In some embodiments, power source 360 may be configured to charge when user device 104 connects with a computer terminal. In some embodiments, power source 360 may be configured to charge wirelessly via an inductive charging coil when user device 104 is placed within in electromagnetic field.

In some embodiments, user device 104 may include a peripheral interface, which may include the hardware, firmware, and/or software that enables communication with various peripheral devices, such as media drives (e.g., magnetic disk, solid state, or optical disk drives), other processing devices, or any other input source used in connection with the instant techniques. In some embodiments, a peripheral interface may include a serial port, a parallel port, a general-purpose input and output (GPIO) port, a game port, a USB, a micro-USB port, a high-definition multimedia (HDMI) port, a video port, an audio port, a Bluetooth^{™} port, an NFC port, another like communication interface, or any combination thereof.

In some embodiments, a transceiver may be configured to communicate with compatible devices and ID tags when they are within a predetermined range. A transceiver may be compatible with one or more of: RFID, NFC, Bluetooth^{™}, BLE (e.g., BLE mesh and/or thread), WiFi^{™}, ZigBee^{™}, ABC protocols or similar technologies.

A mobile network interface may provide access to a cellular network, the Internet, or another wide-area network. In some embodiments, a mobile network interface may include hardware, firmware, and/or software that allows processor(s) 310 to communicate with other devices via wired or wireless networks, whether local or wide area, private or public. A power source may be configured to provide an appropriate alternating current (AC) or direct current (DC) to power components.

As described above, user device 104 may be configured to remotely communicate with one or more other devices of system 100, such as transaction device 102 and/or device linking system 108. In some embodiments, user device 104 may be configured to communicate with one or more devices via network 106. In some embodiments, user device 104 may be configured to detect one or more other user devices associated with a user (e.g., via NFC, Bluetooth^{™}, BLE, etc.) and communicate the presence of those other user device(s) to one or more other devices of system 100, such as device linking system 108. In some embodiments, user device 104 may be configured to detect and transmit biometric data indicative of biological information associated with a user, such as to one or more other devices of system 100 (e.g., device linking system 108).

User device 104 may include one or more storage devices 334 configured to store information used by processor 310 (or other components) to perform certain functions related to the disclosed embodiments. As an example, user device 104 may include memory 330 that includes instructions to enable processor 310 to execute one or more applications, network communication processes, and any other type of application or software known to be available on computer systems. Alternatively, the instructions, application programs, etc., may be stored in an external storage or available from a memory over a network. The one or more storage devices may be a volatile or non-volatile, magnetic, semiconductor, tape, optical, removable, non-removable, or other type of storage device or tangible computer-readable medium.

In some embodiments, user device 104 may include memory 330 that includes instructions that, when executed by processor 310, perform one or more processes consistent with the functionalities disclosed herein. Methods, systems, and articles of manufacture consistent with disclosed embodiments are not limited to separate programs or computers configured to perform dedicated tasks. For example, user device 104 may include memory 330 that may include one or more programs 336 to perform one or more functions of the disclosed embodiments. Moreover, processor 310 may execute one or more programs 336 located remotely from, for example and not in limitation, web server 110, transaction server 112, or device programming system 116. For example, user device 104 may access one or more remote programs 336, that, when executed, perform functions related to one or more disclosed embodiments.

Memory 330 may include one or more memory devices that store data and instructions used to perform one or more features of the disclosed embodiments. Memory 330 may also include any combination of one or more databases controlled by memory controller devices (e.g., one or more servers, etc.) or software, such as document management systems, Microsoft^{™} SQL databases, SharePoint^{™} databases, Oracle^{™} databases, Sybase^{™} databases, or other relational databases. Memory 330 may include software components that, when executed by processor 310, perform one or more processes consistent with the disclosed embodiments. In some embodiments, memory 330 may include a database (e.g., database 334) for storing data to perform one or more of the processes and functionalities associated with the disclosed embodiments.

User device 104 may also be communicatively connected to one or more memory devices (e.g., databases (not shown)) locally or through a network. The remote memory devices may be configured to store information and may be accessed and/or managed by user device 104. By way of example, the remote memory devices may be document management systems, Microsoft^{™} SQL database, SharePoint^{™} databases, Oracle^{™} databases, Sybase^{™} databases, or other relational databases. Systems and methods consistent with disclosed embodiments, however, are not limited to separate databases or even to the use of a database.

In example embodiments of the disclosed technology, user device 104 may include any number of hardware and/or software applications that are executed to facilitate any of the operations. The one or more I/O interfaces may be utilized to receive or collect data and/or user instructions from a wide variety of input devices. Received data may be processed by one or more computer processors as desired in various implementations of the disclosed technology and/or stored in one or more memory devices.

While user device 104 has been described as one form for implementing the techniques described herein, those having ordinary skill in the art will appreciate that other functionally equivalent techniques may be employed. For example, as known in the art, some or all of the functionality implemented via executable instructions may also be implemented using firmware and/or hardware devices such as application specific integrated circuits (ASICs), programmable logic arrays, state machines, etc. Furthermore, other implementations of the user device 104 may include a greater or lesser number of components than those illustrated. Some embodiments may exclude certain components discussed herein. For example, in certain embodiments, user device 104 may not include an OS, depending on the complexity of the program instructions. Embodiments not including an OS may have comparative limited functionality but may also decrease power consumption of user device 104.

FIG. 4 provides an example embodiment of device programming system 116. As shown, device programming system 116 may include a processor 410, an I/O device 420, and a memory 430 containing an OS 440, a database 450, and a program 460. According to some embodiments, device programming system 116 may have a similar structure and components to those described above with respect to transaction device 102 and/or user device 104.

In certain example implementations, device programming system 116 may be a single server or may be configured as a distributed computer system including multiple servers or computers that interoperate to perform one or more of the processes and functionalities associated with the disclosed embodiments. In some embodiments, device programming system 116 may be one or more servers from a serverless or scaling server system. In some embodiments, device programming system 116 may further include a peripheral interface, a transceiver, a mobile network interface in communication with processor 410, a bus configured to facilitate communication between the various components of device programming system 116, and a power source configured to power one or more components of device programming system 116.

While device programming system 116 has been described as one form for implementing the techniques described herein, other, functionally equivalent, techniques may be employed. For example, some or all of the functionality implemented via executable instructions may also be implemented using firmware and/or hardware devices such as ASICs, programmable logic arrays, state machines, etc. Furthermore, other implementations of device programming system 116 may include a greater or lesser number of components than those illustrated.

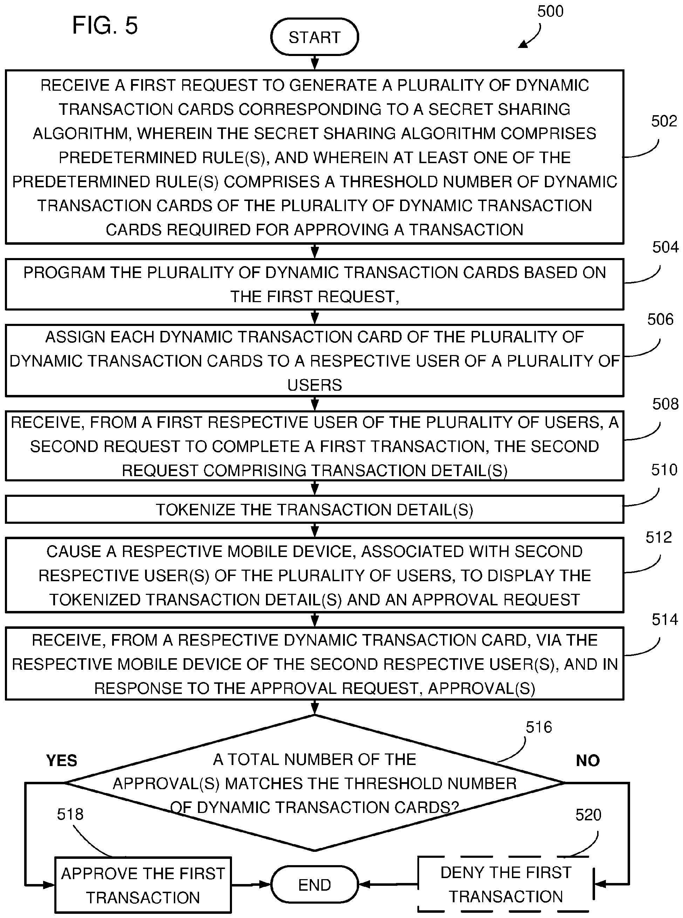

FIG. 5 provides a flow diagram illustrating an exemplary method 500 for linking transaction devices, in accordance with certain embodiments of the disclosed technology. Method 500 may be performed by one or more components of system 100, as described above with respect to FIGS. 1, 2A-2C, 3, and 4.

In block 502 of FIG. 5, the system (e.g., via device linking system 108) may receive a first request to generate a plurality of dynamic transaction cards corresponding to a secret sharing algorithm. The secret sharing algorithm may comprise one or more predetermined rules, at least one of which may comprise a threshold number of dynamic transaction cards of the plurality of dynamic transaction cards required for approving a transaction. That is, the system may receive a request from one or more users, such as a user(s) who is part of a shared group or team (e.g., a corporate board, a family, an executive team, etc.), to generate a grouping of dynamic transaction cards that are each unique, yet correspond to a shared algorithm. Each dynamic transaction card may comprise a respective unique secret that when combined with the respective unique secrets of the other dynamic transaction cards within the plurality of dynamic transaction cards, enables the plurality to jointly complete a shared transaction, as further described below. The purpose of generating this type of plurality of cards may be to ensure that each user, or a certain number of users, of the one or more users has approval and/or control over certain transactions conducted on behalf of the group as a whole, such as system or facility access, domain name transfers, corporate purchases, payments, and the like.

In block 504, the system (e.g., via device programming system 116) may program the plurality of dynamic transaction cards based on the first request. As may be described above, each of the generated dynamic transaction cards may be associated with the other generated dynamic transaction cards within the plurality, such that the plurality shares a common requirement that a certain number of cards approve a transaction prior to it being completed.

In block 506, the system (e.g., via device programming system 116) may assign each dynamic transaction card of the plurality of dynamic transaction cards to a respective user of a plurality of users. For example, if a corporate team includes ten individual members, the programmed plurality of dynamic transaction cards, as discussed above, may include ten individual cards such that each of the ten team members may be associated with a respective card. The system may assign each card to a respective user by requesting and/or receiving identification information from the respective user. For example, each respective user may be required to create an account and/or log into an account owned and/or operated by an organization (e.g., a financial institution) such that each respective user may submit identification information (e.g., full name, social security number, credit score, etc.). The system may be configured to associate each respective user's submitted identification information with each respective user's respective dynamic transaction card. In some embodiments, this process may be the same as or similar to a process for signing up for a typical debit or credit card.

In block 508, the system (e.g., via device linking system 108) may receive, from a first respective user of the plurality of users, a second request to complete a first transaction, the second request comprising one or more transaction details. That is, one user out of a group of users may attempt to conduct a transaction using his or her respective dynamic transaction card, such as by tapping or swiping the dynamic transaction card against a transceiver or a point-of-sale (POS) terminal, or by entering card information, such as a card number, into a physical or mobile terminal. As part of this transaction initiation, the one user may submit transaction details, such as a source account, a destination account, a transaction amount, contact information, a domain name, a purchase order, or other subject matter pertaining to the transaction.

In block 510, the system (e.g., via device programming system 116) may tokenize the one or more transaction details. That is, the system may substitute one or more identifiers (e.g., randomly generated numbers or text) in place of the one or more transaction details to prevent any unauthorized exposure of potentially sensitive information.

In block 512, the system (e.g., via device linking system 108) may cause a respective mobile device, associated with one or more second respective users of the plurality of users, to display the tokenized one or more transaction details and an approval request. That is, after the first respective user requests completion of the first transaction, as discussed above, the system may, in real-time, reach out to the other users of the group (e.g., the corporate team, family, etc.) that were each previously assigned to a respective dynamic transaction card of the plurality of dynamic transaction cards, as discussed above, in order to obtain transaction approval from one or more of those other users. For example, if the plurality of dynamic transaction cards was previously generated for a corporate team comprising ten members, and one member requests completion of a transaction, the system may be configured to cause a respective mobile device (e.g., user device 104) of each of the other nine members to display the tokenized transaction details and/or an approval request.

In some embodiments, the system may be configured to transmit a push notification to each respective mobile device of the other group users. In some embodiments, the tokenized transaction details and/or the approval request may be displayed on each respective mobile device via a graphical user interface (GUI) of a mobile application, a text message, a chat window, an email, etc., such that each of the other group users may view the transaction details and respond to the approval request, as further described below.

In block 514, the system (e.g., via device linking system 108) may receive, from a respective dynamic transaction card, via the respective mobile device of the one or more second respective users, and in response to the approval request, one or more approvals. That is, once each of the other group users receives, via his or her respective mobile device, the transaction details and/or the approval request, as discussed above, each of the other group users may tap his or her respective dynamic transaction card to his or her respective mobile device to approve the transaction. As described above, each dynamic transaction card was previously assigned to a respective user by way of each user submitting his or her identification information. As such, the system may be configured to recognize a user's identity when that user taps his or her dynamic transaction card to his or her mobile device. This identity recognition may occur when a dynamic transaction card creates, via an internal applet, a unique code, message, or signature associated with the specific transaction-at-hand. For example, the applet may generate a unique cryptographic signature associated with the tokenized transaction details. When the respective user taps the dynamic transaction card against the respective mobile device, a wireless connection (e.g., NFC) may be established between the card and the mobile device, such that the card may transmit the signature to the mobile device, which may subsequently transmit the signature back to the system. The system may then verify the signature, i.e., verify the identity of the user of the respective dynamic transaction card by way of the unique signature, in order to deem the user's response as an approval of the transaction.

In some embodiments, the system may determine whether the one or more approvals were received within a predetermined time period, such as within 24 hours, 48 hours, etc., from when the first transaction was initiated. The system may be configured to require that it receive the threshold number of approvals within the predetermined time period in order to approve a transaction. In some embodiments, the predetermined time period may be set by an organization (e.g., a financial institution) when the plurality of dynamic transaction cards is first programmed. In some embodiments, the predetermined time period may be set by the one or more users comprising a group (e.g., a corporate team) requesting the programming of the plurality of dynamic transaction cards. This feature may provide the organization and/or the user group with an added benefit of reducing potentially fraudulent transactions conducted on behalf of the group.

In block 516, the system (e.g., via device programming system 116) may determine whether a total number of the one or more approvals matches the threshold number of dynamic transaction cards. That is, once the system receives one or more approvals from one or more users, as described above, the system may compare the total number of received approvals to the predetermined rule, e.g., the threshold number of required cards, associated with the applicable plurality of dynamic transaction cards. For example, if the threshold number of dynamic transaction cards necessary for approving a transaction is six cards out of a plurality of ten dynamic transaction cards, the system may compare the number of received approvals to that six-card threshold.

In block 518, responsive to determining the total number of the one or more approvals matches the threshold number of dynamic transaction cards, the system (e.g., device linking system 108) may approve the first transaction. That is, as in the above example, if the system determines it received at least six approvals out of the ten dynamic transaction cards comprising the plurality of dynamic transaction cards, the system may approve the transaction.

Alternatively, in block 520, responsive to determining the total number of the one or more approvals does not match the threshold number of dynamic transaction cards, the system (e.g., via device linking system 108) may deny the first transaction. In some embodiments, the system may also, or alternatively, transmit a notification (e.g., a push notification, a chat message, an in-application message, etc.) to a requester mobile device associated with the first respective user (i.e., the user who initiated the transaction) indicating the total number of the one or more approvals does not match the threshold number of dynamic transaction cards.

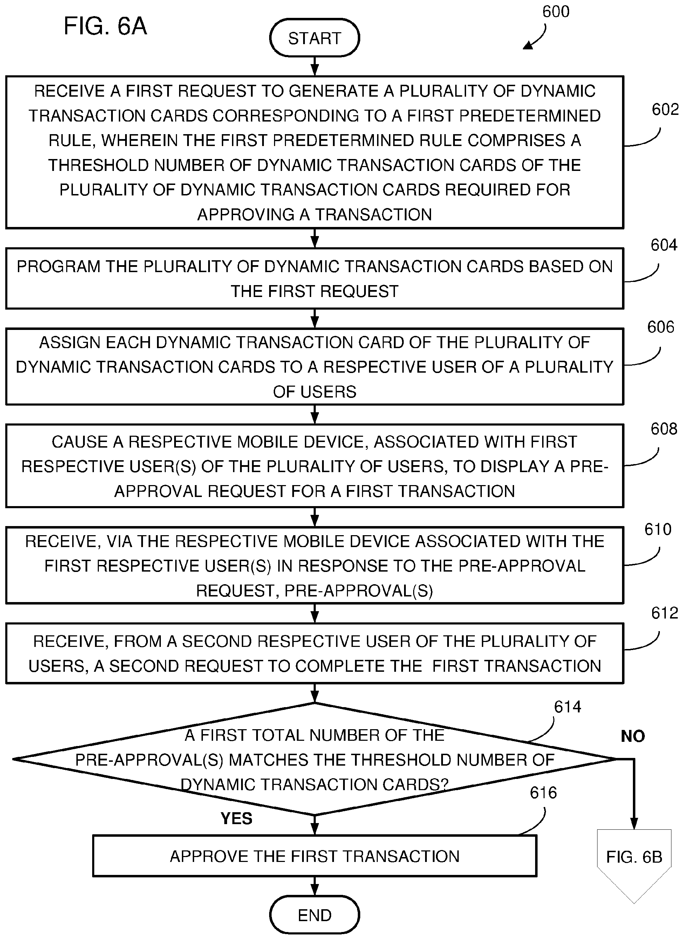

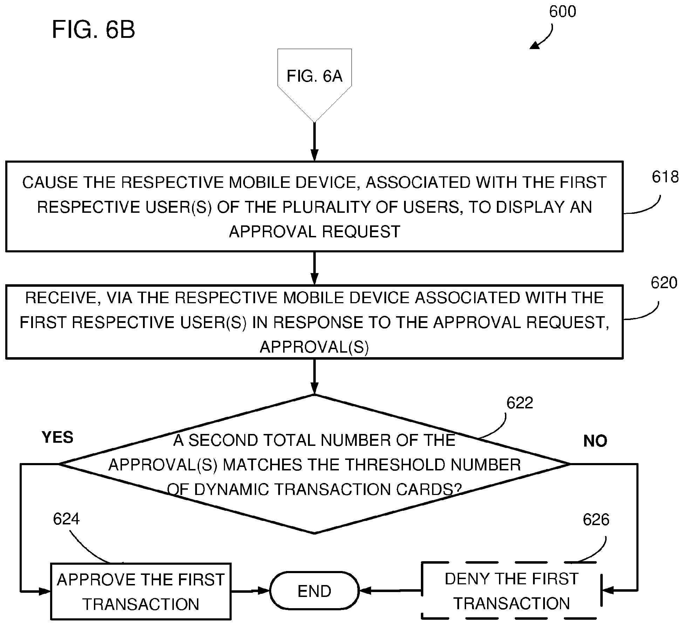

Method 600 of FIGS. 6A-6B is similar to method 500 of FIG. 5, except that method 600 includes receiving one or more pre-approvals prior to the conducting of a transaction. The descriptions of block 602, 604, 606, 610, 612, 616, 620, 622, 624, and 626 may be the same as or similar to the respective descriptions of blocks 502 (with 504), 504 (with 502), 506, 514, 508, 518, 514, 516, 518, and 520 of method 500 and as such, are not repeated herein for brevity.

In block 608, the system (e.g., via device linking system 108) may cause a respective mobile device, associated with one or more first respective users of the plurality of users, to display a pre-approval request for a first transaction. That is, the system may be configured to receive an indication of an upcoming transaction to be conducted by one group member, and as such, may reach out to the remaining group members for approvals prior to the initiating of the transaction. For example, one user out of a group of users may submit a request to access a particular facility or system, or have a purchase order submitted, on a future date. In such a case, the system, in the same or similar fashion as outlined above with respect to block 512 of FIG. 5, may reach out to the other group users for pre-approval. This feature provides the added benefit of reducing the chance that an upcoming potentially critical transaction will be denied because, e.g., one or more group users inadvertently fails to respond to an approval request at the same time (or shortly thereafter) the transaction is being conducted. This may occur, for example, if one or more group users are traveling or otherwise away from their respective mobile devices when the system sends out approval requests. This feature thus enables groups to coordinate ahead of time such that they can ensure future transactions will be successfully completed.

In some embodiments, as with receiving approvals (block 514 of FIG. 5), the system may be configured to require receipt of these pre-approvals within a predetermined time period.

In block 614, the system (e.g., via device programming system 116) may determine whether a first total number of the one or more pre-approvals matches the threshold number of dynamic transaction cards. This step may be conducted in the same or similar fashion as block 516 of FIG. 5, described above. That is, the initially programmed predetermined rule comprising the threshold number of dynamic transaction cards necessary for approving a transaction, as discussed above, may apply to pre-approvals and/or approvals.

In block 618, responsive to determining the first total number of the one or more pre-approvals does not match the threshold number of dynamic transaction cards, the system (e.g., via device linking system 108) may cause the respective mobile device, associated with the one or more first respective users of the plurality of users, to display an approval request. That is, after the system receives a transaction request, if the system determines it did not previously receive the threshold or required number of pre-approvals to approve the transaction, rather than immediately deny the transaction, the system may reach out to the other group users to request approval in real-time (as in block 512 of FIG. 5.) In some embodiments, the system may also, or alternatively, transmit a notification (e.g., a push notification, a chat message, an in-application message, etc.) to a requester mobile device associated with the second respective user (i.e., the user who initiated the transaction) indicating the total number of the one or more pre-approvals does not match the threshold number of dynamic transaction cards. This notification may also provide an indication that, because of the unsatisfied threshold, the system may transmit approval requests, in real-time, to the other group users.

### EXAMPLE USE CASE

The following example use case describes an example of a typical user flow pattern. This section is intended solely for explanatory purposes and not in limitation.

In one example, a group of users, such as a corporate board, may desire to conduct certain transactions (e.g., system access) by requiring approvals from a minimum number of board members. For example, the board may desire some transactions to require at least five out of the total seven board members to approve. The corporate board may thus request a system, such as one owned and/or operated by a financial institution, generate seven dynamic transaction cards that correspond to one another via a secret sharing algorithm. This algorithm may comprise a rule wherein at least five of the seven board members is required to approve a transaction before that transaction may be completed. The system, based on the board's request, may program seven individual dynamic transaction cards according to the chosen algorithm. The system may then assign each of the dynamic transaction cards to a respective board member, for example by incorporating respective identification information into a respective card.

One board member out of the seven members may attempt to use his dynamic transaction card to initiate a transaction, such as transferring a corporate domain name. When the system recognizes this transaction has been initiated, the system may transmit a push notification to a respective mobile phone of each of the other six board members. These push notifications may alert the six members that the one member is initiating this corporate domain name transfer, and may request each of the six members approve this specific transaction. Each of the six members may tap his or her respective dynamic transaction card to his or her respective mobile phone. With that tapping motion, each respective dynamic transaction card may, via an NFC connection, transmit a respective board member's identification information to his or her respective mobile phone, which may then transmit a respective unique code to the system. The system may then verify that each respective unique code is associated with a respective board member. Upon receipt of each respective identification code, the system may determine whether it has received the at least five required approvals for conducting the one board member's transaction. The system may determine it has received an approval from six board members, and as such, may approve the transaction.

In some embodiments, the system may be configured to determine whether it received at least five approvals within a predetermined time period (e.g., 24 hours). The system may be configured to approve the transaction only if it determines at least five approvals were received within that predetermined time period.

In some embodiments, the one board member may have previously contacted the other six board members to alert them of the upcoming domain transfer, such that each of the other six board members could submit a pre-approval of the transaction. In this case, when the one board member later goes to initiate the transaction, the system may be configured to determine whether it already received the required number of pre-approvals in order to approve the transaction.

In some embodiments, the one board member, in initiating the domain name transfer, may submit one or more transaction details to the system (e.g., a source account, a destination account, contact information, an authorization code, etc.). The system may be configured to tokenize these details and include the tokenized details along with the approval request in the push notification to each respective mobile phone of the other six board members. Once each of the six board members taps his or her respective dynamic transaction card to his or her respective mobile phone, the transaction details (and the approval) are sent back to the system in the form of a unique cryptographic signature associated with a respective board member. Upon verifying each unique cryptographic signature, and determining it has received the requisite number to complete the transaction, the system may approve the transaction.

In some embodiments, when the system determines it has not received the requisite number of approvals (or pre-approvals) for a given transaction, the system may transmit a notification to the one board member (and/or the other six board members) to inform him that the secret sharing algorithm has not been satisfied and the transaction is denied.

In some examples, disclosed systems or methods may involve one or more of the following clauses:
Clause 1: A system comprising: one or more processors; and a memory in communication with the one or more processors and storing instructions that, when executed by the one or more processors, are configured to cause the system to: receive a first request to generate a plurality of dynamic transaction cards corresponding to a secret sharing algorithm, wherein the secret sharing algorithm comprises one or more predetermined rules, and wherein at least one of the one or more predetermined rules comprises a threshold number of dynamic transaction cards of the plurality of dynamic transaction cards required for approving a transaction; program the plurality of dynamic transaction cards based on the first request; assign each dynamic transaction card of the plurality of dynamic transaction cards to a respective user of a plurality of users; receive, from a first respective user of the plurality of users, a second request to complete a first transaction, the second request comprising one or more transaction details; tokenize the one or more transaction details; cause a respective mobile device, associated with one or more second respective users of the plurality of users, to display the tokenized one or more transaction details and an approval request; receive, from a respective dynamic transaction card, via the respective mobile device of the one or more second respective users, and in response to the approval request, one or more approvals; determine whether a total number of the one or more approvals matches the threshold number of dynamic transaction cards; and responsive to determining the total number of the one or more approvals matches the threshold number of dynamic transaction cards, approve the first transaction.
Clause 2: The system of clause 1, wherein each dynamic transaction card of the plurality of dynamic transaction cards comprises a respective unique secret.
Clause 3: The system of clause 1 or 2, wherein each of the one or more approvals comprises a unique cryptographic signature.
Clause 4: The system of clause 3, wherein the unique cryptographic signature is associated with the one or more transaction details.
Clause 5: The system of clause 4, wherein the one or more transaction details comprise one or more of a source account, a destination account, a transaction amount, or combinations thereof.
Clause 6: The system of clause 4 or 5, wherein a respective dynamic transaction card assigned to each of the one or more second respective users comprises: a near-field communication (NFC) transceiver; and a chip comprising an applet, wherein the applet is configured to generate the unique cryptographic signature when the respective dynamic transaction card comes in contact with an NFC reader of a mobile device.
Clause 7: The system of clause 6, wherein the respective dynamic transaction card is configured to receive power from the NFC reader of the mobile device.
Clause 8: The system of any one of clauses 1 to 7, wherein the instructions are further configured to cause the system to: determine whether the one or more approvals were received within a predetermined time period; and responsive to determining the one or more approvals were received within the predetermined time period, approve the first transaction.
Clause 9: The system of any one of clauses 1 to 8, wherein the first transaction comprises a certificate approval, a domain name transfer, a corporate decision, a purchase order, a payment, an access request, or combinations thereof.
Clause 10: The system of any one of clauses 1 to 9, wherein the instructions are further configured to cause the system to: responsive to determining the total number of the one or more approvals does not match the threshold number of dynamic transaction cards: transmit a notification to a requester mobile device associated with the first respective user indicating the total number of the one or more approvals does not match the threshold number of dynamic transaction cards; and deny the first transaction.
Clause 11: A system comprising: one or more processors; and a memory in communication with the one or more processors and storing instructions that, when executed by the one or more processors, are configured to cause the system to: receive a first request to generate a plurality of dynamic transaction cards corresponding to a first predetermined rule, wherein the first predetermined rule comprises a threshold number of dynamic transaction cards of the plurality of dynamic transaction cards required for approving a transaction; program the plurality of dynamic transaction cards based on the first request; assign each dynamic transaction card of the plurality of dynamic transaction cards to a respective user of a plurality of users; cause a respective mobile device, associated with one or more first respective users of the plurality of users, to display a pre-approval request for a first transaction; receive, via the respective mobile device associated with the one or more first respective users in response to the pre-approval request, one or more pre-approvals; receive, from a second respective user of the plurality of users, a second request to complete the first transaction; determine whether a first total number of the one or more pre-approvals matches the threshold number of dynamic transaction cards; responsive to determining the first total number of the one or more pre-approvals matches the threshold number of dynamic transaction cards, approve the first ransacttion; and responsive to determining the first total number of the one or more pre-approvals does not match the threshold number of dynamic transaction cards: cause the respective mobile device, associated with the one or more first respective users of the plurality of users, to display an approval request; receive, via the respective mobile device associated with the one or more first respective users in response to the approval request, one or more approvals; determine whether a second total number of the one or more approvals matches the threshold number of dynamic transaction cards; and responsive to determining the second total number of the one or more approvals matches the threshold number of dynamic transaction cards, approve the first transaction.
Clause 12: The system of clause 11, wherein each dynamic transaction card of the plurality of dynamic transaction cards comprises a respective unique secret, and the plurality of dynamic transaction cards corresponds to a secret sharing algorithm.
Clause 13: The system of clause 11 or 12, wherein the first transaction corresponds to one or more transaction details, the instructions being further configured to cause the system to: tokenize the one or more transaction details; and cause the respective mobile device of the one or more first respective users of the plurality of users, to display the tokenized one or more transaction details.
Clause 14: The system of clause 13, wherein each of the one or more approvals comprises a unique cryptographic signature associated with the one or more transaction details, and wherein the one or more transaction details comprise one or more of a source account, a destination account, a transaction amount, or combinations thereof.
Clause 15: The system of any one of clauses 11 to 14, wherein a respective dynamic transaction card assigned to each of the one or more first respective users comprises: a near-field communication (NFC) transceiver; and a chip comprising an applet, wherein the applet is configured to generate a unique cryptographic signature when the respective dynamic transaction card comes in contact with an NFC reader of a mobile device.
Clause 16: The system of any one of clauses 11 to 15, wherein the one or more pre-approvals and the one or more approvals are received from a respective dynamic transaction card associated with the one or more first respective users.
Clause 17: The system of any one of clauses 11 to 16, wherein the instructions are further configured to cause the system to: determine whether the one or more approvals were received within a predetermined time period; and responsive to determining the one or more approvals were received within the predetermined time period, approve the first transaction.
Clause 18: The system of any one of clauses 11 to 17, wherein the first transaction comprises a certificate approval, a domain name transfer, a corporate decision, a purchase order, a payment, an access request, or combinations thereof.
Clause 19: A system comprising: one or more processors; and a memory in communication with the one or more processors and storing instructions that, when executed by the one or more processors, are configured to cause the system to: program a plurality of dynamic transaction cards, wherein a threshold number of dynamic transaction cards of the plurality of dynamic transaction cards is required for approving a transaction; assign each dynamic transaction card of the plurality of dynamic transaction cards to a respective user of a plurality of users; receive, from a first respective user of the plurality of users, a request to complete the transaction; cause a respective mobile device, associated with one or more second respective users of the plurality of users, to display an approval request; receive, from a respective dynamic transaction card, via the respective mobile device associated with the one or more second respective users, in response to the approval request, one or more approvals; determine whether a total number of the one or more approvals matches the threshold number of dynamic transaction cards; and responsive to determining the total number of the one or more approvals matches the threshold number of dynamic transaction cards, approve the transaction.
Clause 20: The system of clause 19, wherein each dynamic transaction card of the plurality of dynamic transaction cards comprises a respective unique secret, and the plurality of dynamic transaction cards corresponds to a secret sharing algorithm.

The features and other aspects and principles of the disclosed embodiments may be implemented in various environments. Such environments and related applications may be specifically constructed for performing the various processes and operations of the disclosed embodiments or they may include a general-purpose computer or computing platform selectively activated or reconfigured by program code to provide the necessary functionality. Further, the processes disclosed herein may be implemented by a suitable combination of hardware, software, and/or firmware. For example, the disclosed embodiments may implement general purpose machines configured to execute software programs that perform processes consistent with the disclosed embodiments. Alternatively, the disclosed embodiments may implement a specialized apparatus or system configured to execute software programs that perform processes consistent with the disclosed embodiments. Furthermore, although some disclosed embodiments may be implemented by general purpose machines as computer processing instructions, all or a portion of the functionality of the disclosed embodiments may be implemented instead in dedicated electronics hardware.

The disclosed embodiments also relate to tangible and non-transitory computer readable media that include program instructions or program code that, when executed by one or more processors, perform one or more computer-implemented operations. The program instructions or program code may include specially designed and constructed instructions or code, and/or instructions and code well-known and available to those having ordinary skill in the computer software arts. For example, the disclosed embodiments may execute high level and/or low-level software instructions, such as machine code (e.g., such as that produced by a compiler) and/or high-level code that can be executed by a processor using an interpreter.

The technology disclosed herein typically involves a high-level design effort to construct a computational system that can appropriately process unpredictable data. Mathematical algorithms may be used as building blocks for a framework, however certain implementations of the system may autonomously learn their own operation parameters, achieving better results, higher accuracy, fewer errors, fewer crashes, and greater speed.

As used in this application, the terms "component," "module," "system," "server," "processor," "memory," and the like are intended to include one or more computer-related units, such as but not limited to hardware, firmware, a combination of hardware and software, software, or software in execution. For example, a component may be, but is not limited to being, a process running on a processor, an object, an executable, a thread of execution, a program, and/or a computer. By way of illustration, both an application running on a computing device and the computing device can be a component. One or more components can reside within a process and/or thread of execution and a component may be localized on one computer and/or distributed between two or more computers. In addition, these components can execute from various computer readable media having various data structures stored thereon. The components may communicate by way of local and/or remote processes such as in accordance with a signal having one or more data packets, such as data from one component interacting with another component in a local system, distributed system, and/or across a network such as the Internet with other systems by way of the signal.

Certain embodiments and implementations of the disclosed technology are described above with reference to block and flow diagrams of systems and methods and/or computer program products according to example embodiments or implementations of the disclosed technology. It will be understood that one or more blocks of the block diagrams and flow diagrams, and combinations of blocks in the block diagrams and flow diagrams, respectively, can be implemented by computer-executable program instructions. Likewise, some blocks of the block diagrams and flow diagrams may not necessarily need to be performed in the order presented, may be repeated, or may not necessarily need to be performed at all, according to some embodiments or implementations of the disclosed technology.

These computer-executable program instructions may be loaded onto a general-purpose computer, a special-purpose computer, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable memory that can direct a computer or other programmable data processing apparatus to function in a particular manner, such that the instructions stored in the computer-readable memory produce an article of manufacture including instruction means that implement one or more functions specified in the flow diagram block or blocks.

As an example, embodiments or implementations of the disclosed technology may provide for a computer program product, including a computer-usable medium having a computer-readable program code or program instructions embodied therein, said computer-readable program code adapted to be executed to implement one or more functions specified in the flow diagram block or blocks. Likewise, the computer program instructions may be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions, and program instruction means for performing the specified functions. It will also be understood that each block of the block diagrams and flow diagrams, and combinations of blocks in the block diagrams and flow diagrams, can be implemented by special-purpose, hardware-based computer systems that perform the specified functions, elements or steps, or combinations of special-purpose hardware and computer instructions.

Certain implementations of the disclosed technology described above with reference to user devices may include mobile computing devices. Those skilled in the art recognize that there are several categories of mobile devices, generally known as portable computing devices that can run on batteries but are not usually classified as laptops. For example, mobile devices can include, but are not limited to portable computers, tablet PCs, internet tablets, PDAs, ultra-mobile PCs (UMPCs), wearable devices, and smart phones. Additionally, implementations of the disclosed technology can be utilized with internet of things (IoT) devices, smart televisions and media devices, appliances, automobiles, toys, and voice command devices, along with peripherals that interface with these devices.

In this description, numerous specific details have been set forth. It is to be understood, however, that implementations of the disclosed technology may be practiced without these specific details. In other instances, well-known methods, structures, and techniques have not been shown in detail in order not to obscure an understanding of this description. References to "one embodiment," "an embodiment," "some embodiments," "example embodiment," "various embodiments," "one implementation," "an implementation," "example implementation," "various implementations," "some implementations," etc., indicate that the implementation(s) of the disclosed technology so described may include a particular feature, structure, or characteristic, but not every implementation necessarily includes the particular feature, structure, or characteristic. Further, repeated use of the phrase "in one implementation" does not necessarily refer to the same implementation, although it may.

Throughout the specification and the claims, the following terms take at least the meanings explicitly associated herein, unless the context clearly dictates otherwise. The term "connected" means that one function, feature, structure, or characteristic is directly joined to or in communication with another function, feature, structure, or characteristic. The term "coupled" means that one function, feature, structure, or characteristic is directly or indirectly joined to or in communication with another function, feature, structure, or characteristic. The term "or" is intended to mean an inclusive "or." Further, the terms "a," "an," and "the" are intended to mean one or more unless specified otherwise or clear from the context to be directed to a singular form. By "comprising" or "containing" or "including" is meant that at least the named element, or method step is present in article or method, but does not exclude the presence of other elements or method steps, even if the other such elements or method steps have the same function as what is named.

It is to be understood that the mention of one or more method steps does not preclude the presence of additional method steps or intervening method steps between those steps expressly identified. Similarly, it is also to be understood that the mention of one or more components in a device or system does not preclude the presence of additional components or intervening components between those components expressly identified.

Although embodiments are described herein with respect to systems or methods, it is contemplated that embodiments with identical or substantially similar features may alternatively be implemented as systems, methods and/or non-transitory computer-readable media.

As used herein, unless otherwise specified, the use of the ordinal adjectives "first," "second," "third," etc., to describe a common object, merely indicates that different instances of like objects are being referred to, and is not intended to imply that the objects so described must be in a given sequence, either temporally, spatially, in ranking, or in any other manner.

While certain embodiments of this disclosure have been described in connection with what is presently considered to be the most practical and various embodiments, it is to be understood that this disclosure is not to be limited to the disclosed embodiments, but on the contrary, is intended to cover various modifications and equivalent arrangements included within the scope of the appended claims. Although specific terms are employed herein, they are used in a generic and descriptive sense only and not for purposes of limitation.

This written description uses examples to disclose certain embodiments of the technology and also to enable any person skilled in the art to practice certain embodiments of this technology, including making and using any apparatuses or systems and performing any incorporated methods. The patentable scope of certain embodiments of the technology is defined in the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A system comprising:
one or more processors; and
a memory in communication with the one or more processors and storing instructions that, when executed by the one or more processors, are configured to cause the system to:
receive a first request to generate a plurality of dynamic transaction cards corresponding to a secret sharing algorithm, wherein the secret sharing algorithm comprises one or more predetermined rules, and wherein at least one of the one or more predetermined rules comprises a threshold number of dynamic transaction cards of the plurality of dynamic transaction cards required for approving a transaction;
program the plurality of dynamic transaction cards based on the first request;
assign each dynamic transaction card of the plurality of dynamic transaction cards to a respective user of a plurality of users;
receive, from a first respective user of the plurality of users, a second request to complete a first transaction, the second request comprising one or more transaction details;
tokenize the one or more transaction details;
cause a respective mobile device, associated with one or more second respective users of the plurality of users, to display the tokenized one or more transaction details and an approval request;
receive, from a respective dynamic transaction card, via the respective mobile device of the one or more second respective users, and in response to the approval request, one or more approvals;
determine whether a total number of the one or more approvals matches the threshold number of dynamic transaction cards; and
responsive to determining the total number of the one or more approvals matches the threshold number of dynamic transaction cards, approve the first transaction.

2. The system of claim 1, wherein each dynamic transaction card of the plurality of dynamic transaction cards comprises a respective unique secret.

3. The system of claim 1 or 2, wherein each of the one or more approvals comprises a unique cryptographic signature.

4. The system of claim 3, wherein the unique cryptographic signature is associated with the one or more transaction details, wherein, optionally, the one or more transaction details comprise one or more of a source account, a destination account, a transaction amount, or combinations thereof.

5. The system of claim 4, wherein a respective dynamic transaction card assigned to each of the one or more second respective users comprises:
a near-field communication (NFC) transceiver; and
a chip comprising an applet, wherein the applet is configured to generate the unique cryptographic signature when the respective dynamic transaction card comes in contact with an NFC reader of a mobile device;
and wherein, optionally, the respective dynamic transaction card is configured to receive power from the NFC reader of the mobile device.

6. The system of any one of the preceding claims, wherein the instructions are further configured to cause the system to:
responsive to determining the total number of the one or more approvals does not match the threshold number of dynamic transaction cards:
transmit a notification to a requester mobile device associated with the first respective user indicating the total number of the one or more approvals does not match the threshold number of dynamic transaction cards; and
deny the first transaction.

7. A system comprising:
one or more processors; and
a memory in communication with the one or more processors and storing instructions that, when executed by the one or more processors, are configured to cause the system to:
receive a first request to generate a plurality of dynamic transaction cards corresponding to a first predetermined rule, wherein the first predetermined rule comprises a threshold number of dynamic transaction cards of the plurality of dynamic transaction cards required for approving a transaction;
program the plurality of dynamic transaction cards based on the first request;
assign each dynamic transaction card of the plurality of dynamic transaction cards to a respective user of a plurality of users;
cause a respective mobile device, associated with one or more first respective users of the plurality of users, to display a pre-approval request for a first transaction;
receive, via the respective mobile device associated with the one or more first respective users in response to the pre-approval request, one or more pre-approvals;
receive, from a second respective user of the plurality of users, a second request to complete the first transaction;
determine whether a first total number of the one or more pre-approvals matches the threshold number of dynamic transaction cards;
responsive to determining the first total number of the one or more pre-approvals matches the threshold number of dynamic transaction cards, approve the first transaction; and
responsive to determining the first total number of the one or more pre-approvals does not match the threshold number of dynamic transaction cards:
cause the respective mobile device, associated with the one or more first respective users of the plurality of users, to display an approval request;
receive, via the respective mobile device associated with the one or more first respective users in response to the approval request, one or more approvals;
determine whether a second total number of the one or more approvals matches the threshold number of dynamic transaction cards; and
responsive to determining the second total number of the one or more approvals matches the threshold number of dynamic transaction cards, approve the first transaction.

8. The system of claim 7, wherein the first transaction corresponds to one or more transaction details, the instructions being further configured to cause the system to:
tokenize the one or more transaction details; and
cause the respective mobile device, associated with the one or more first respective users of the plurality of users, to display the tokenized one or more transaction details.

9. The system of claim 7 or 8, wherein each of the one or more approvals comprises a unique cryptographic signature associated with the one or more transaction details, and wherein the one or more transaction details comprise one or more of a source account, a destination account, a transaction amount, or combinations thereof.

10. The system of any one of claims 7 to 9, wherein a respective dynamic transaction card assigned to each of the one or more first respective users comprises:
a near-field communication (NFC) transceiver; and
a chip comprising an applet, wherein the applet is configured to generate a unique cryptographic signature when the respective dynamic transaction card comes in contact with an NFC reader of a mobile device.

11. The system of any one of claims 7 to 10, wherein the one or more pre-approvals and the one or more approvals are received from a respective dynamic transaction card associated with the one or more first respective users.

12. The system of any one of the preceding claims, wherein the instructions are further configured to cause the system to:
determine whether the one or more approvals were received within a predetermined time period; and
responsive to determining the one or more approvals were received within the predetermined time period, approve the first transaction.

13. The system of any one of the preceding claims, wherein the first transaction comprises a certificate approval, a domain name transfer, a corporate decision, a purchase order, a payment, an access request, or combinations thereof.

14. A system comprising:
one or more processors; and
a memory in communication with the one or more processors and storing instructions that, when executed by the one or more processors, are configured to cause the system to:
program a plurality of dynamic transaction cards, wherein a threshold number of dynamic transaction cards of the plurality of dynamic transaction cards is required for approving a transaction;
assign each dynamic transaction card of the plurality of dynamic transaction cards to a respective user of a plurality of users;
receive, from a first respective user of the plurality of users, a request to complete the transaction;
cause a respective mobile device, associated with one or more second respective users of the plurality of users, to display an approval request;
receive, from a respective dynamic transaction card, via the respective mobile device associated with the one or more second respective users, in response to the approval request, one or more approvals;
determine whether a total number of the one or more approvals matches the threshold number of dynamic transaction cards; and
responsive to determining the total number of the one or more approvals matches the threshold number of dynamic transaction cards, approve the transaction.

15. The system of any one of the preceding claims, wherein each dynamic transaction card of the plurality of dynamic transaction cards comprises a respective unique secret, and the plurality of dynamic transaction cards corresponds to a secret sharing algorithm.
